## Europäisches Patentamt

## European Patent Office

## Office européen des brevets

(19)

(11) Veröffentlichungsnummer: **0 296 255**
**B1**

(12)
# EUROPÄISCHE PATENTSCHRIFT

(45) Veröffentlichungstag der Patentschrift:
**31.01.90**

(51) Int. Cl.⁴: **B65G 23/22, B65G 23/08**

(21) Anmeldenummer: **87108872.0**

(22) Anmeldetag: **22.06.87**

(54) **Vorrichtung zum Antrieb von Förderbändern.**

(43) Veröffentlichungstag der Anmeldung:
**28.12.88 Patentblatt 88/52**

(45) Bekanntmachung des Hinweises auf die Patenterteilung:
**31.01.90 Patentblatt 90/5**

(84) Benannte Vertragsstaaten:
**AT BE CH DE FR GB IT LI NL**

(56) Entgegenhaltungen:
**FR-A- 2 560 861**
**GB-A- 887 715**

(73) Patentinhaber: **MTF Technik Ing. (grad.) Hans Gert Schürfeld, Stadionstrasse 8, D-5275 Bergneustadt(DE)**

(72) Erfinder: **Schürfeld, Hans Gert, Ing. (grad.),**
**Hauptstrasse 76a, D-5275 Bergneustadt(DE)**

(74) Vertreter: **Stenger, Alex, Dipl.-Ing., Patentanwälte Dipl.-Ing. A. Stenger Dipl.-Ing. W. Watzke Dipl.-Ing. H.J. Ring Kaiser-Friedrich-Ring 70, D-4000 Düsseldorf 11(DE)**

ACTORUM AG

## Beschreibung

Die Erfindung betrifft ein Förderband mit einem aus Holmen gebildeten Förderbandkörper, in dem eine Antriebsrolle und mindestens eine mitlaufende Rolle für einen Gurt gelagert sind, und mit einem innerhalb des Förderbandkörpers angeordneten Antriebselement, das über ein Getriebe mit der Antriebsrolle verbunden ist.

Um Betriebsabläufe rationell zu gestalten, werden Förderbänder eingesetzt, die Materialien schnell und problemlos transportieren.

Es sind bereits Förderbänder bekannt geworden, bei denen eine Antriebsvorrichtung platzsparend und geschützt innerhalb eines Förderbandkörpers angeordnet ist. Bei dem aus der GB-A 887 715 bekannten Förderband ist hierzu zwischen einer Antriebsrolle und einem Motor ein Getriebe angeordnet, welches drehbar auf der Antriebsrolle befestigt und mit einer besonderen Befestigungsvorrichtung am Rahmen des Förderbandes gesichert ist. Dabei ist besonders nachteilig, daß zumindest der Gurt demontiert werden muß, um an die Antriebsvorrichtung und deren Befestigungsvorrichtung zu gelangen. Diese Konstruktion ist außerdem aufwendig, weil das Getriebe einen eigenen Rahmen für die Befestigung des Antriebsmotors und die Lagerung an der Antriebsrolle hat und sowohl eine Lagerung des Getriebes an der Antriebsrolle, als auch eine Befestigung des Getriebes an dem Rahmen vorgesehen sind.

Aus der FR-A 2 560 861 ist ein weiteres Förderband mit innerhalb eines Förderbandkörpers angeordnetem Antriebselement bekannt, welches von einer kompliziert geformten und auf einer Achse für die Lagerung einer Antriebsrolle befestigten Halteplatte in einem unveränderlichen Abstand zur Antriebsrolle gehalten wird. Auch bei diesem Förderband ist der Ausbau des Antriebselementes schwierig, weil zumindest der Gurt bzw. die Antriebsrolle und das Antriebszahnrad demontiert werden müssen, bevor das Antriebselement losgeschraubt und aus der Halteplatte gezogen werden kann.

Davon ausgehend liegt der Erfindung die Aufgabe zugrunde, ein verbessertes Förderband mit innerhalb des Förderbandkörpers angeordnetem Antriebselement zu schaffen, bei dem insbesondere das Antriebselement leichter ein- und ausgebaut werden kann.

Zur technischen Lösung dieser Aufgabe ist vorgesehen, daß das Antriebselement, insbesondere ein Getriebemotor durch eine Ausnehmung im einen Holmen in eine Längsseite des Förderbandes eingesteckt und lösbar mit dem Förderbandkörper verbunden ist.

Ein erfindungsgemäßes Förderband hat den Vorteil, daß das Antriebselement besser zugänglich ist, weil es in die Längsseite des Förderbandes ein- und ausgebaut werden kann, ohne daß das Förderband oder der Gurt demontiert werden müssen. Dabei nutzt die Erfindung den ohnehin steif auszuführenden Förderbandkörper für die Befestigung des Antriebselementes aus. Hierdurch wird ein zusätzlicher Rahmen für ein Antriebsgetriebe bzw. eine kompliziert geformte Halteplatte und deren Lagerung bzw. Befestigung an Antriebsrolle bzw. Förderbandkörper eingespart.

Ein gemäß einer Ausgestaltung der Erfindung das Antriebselement mit dem Förderbandkörper verbindender Motorspannflansch erleichtert den Ein- und Ausbau, weil er beim Einstecken des Antriebselementes einen Anschlag bilden und gut zugängliche Schraubverbindungen aufnehmen kann. Wenn der Motorspannflansch gemäß einer weiteren Ausgestaltung Langlöcher aufweist, ist der Abstand zwischen Antriebselement und Antriebsrolle einstellbar, so daß beliebige Getriebe eingesetzt und nachgestellt werden können.

Bei einer bevorzugten Ausgestaltung hat das Antriebselement eine aus dem Förderbandkörper herausragende Antriebswelle, die über das Getriebe mit der Antriebsrolle verbunden ist, so daß das zumindest teilweise außerhalb des Förderbandkörpers angeordnete Getriebe leichter zugänglich ist. Antriebselement und Antriebsrolle werden vorzugsweise über ein Zugmittelgetriebe, insbesondere ein Kettengetriebe oder Riemengetriebe, ein Reibradgetriebe oder ein Zahnradgetriebe verbunden.

Zur Verbesserung der Stabilität kann der Motorspannflansch über Schrauben mit einem Holmverstärkungsflansch verbunden sein, wobei der Holmverstärkungsflansch fest mit einem Holm bzw. Holmstück des Förderbandkörpers verbunden ist. Eine besonders stabile Rahmenkonstruktion zum Abstützen der Antriebskräfte wird durch in Querrichtung des Holmes bzw. Holmstückes beidseitig der Antriebsvorrichtung angeordnete Holmverstärkungen des Förderbandkörpers geschaffen.

Wenn der Förderbandkörper ein einerseits mit dem Holmstück fest verbundenes und die Getriebeachse schneidendes Distanzstück hat, welches andererseits mit einem die Antriebsrolle aufnehmenden Achshalter fest verbunden ist, wird das Getriebe neben der Antriebsrolle durch den Achshalter nach außen abgedeckt. Dennoch kann die Zugänglichkeit des Antriebselementes gewahrt bleiben, wenn der Achshalter den Motorspannflansch nicht wesentlich überdeckt. Zumindest im Bereich des Motorspannflansches kann das Getriebe durch eine zusätzliche, leicht demontierbare Blechkonstruktion abgedeckt werden.

Außerdem wird durch diese Konstruktion eine fliegende Befestigung eines Antriebselementes auf der Antriebsrolle vermieden und somit die Festigkeit der Anordnung erhöht.

Es zeigen

Fig. 1 die erfindungsgemäße Vorrichtung im Längsschnitt

Fig. 2 die erfindungsgemäße Vorrichtung in der Ansicht

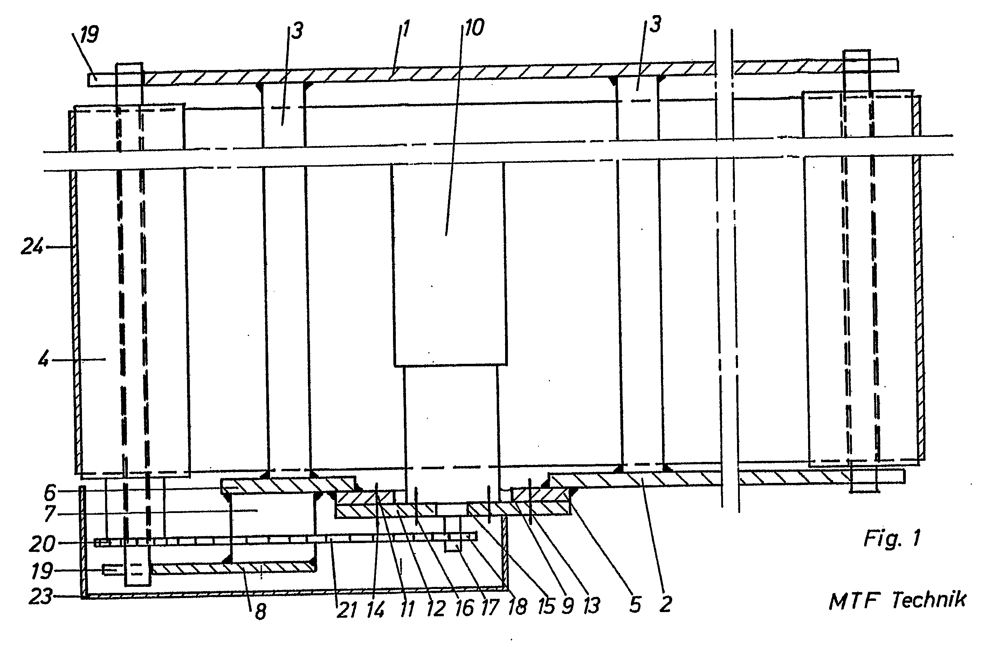

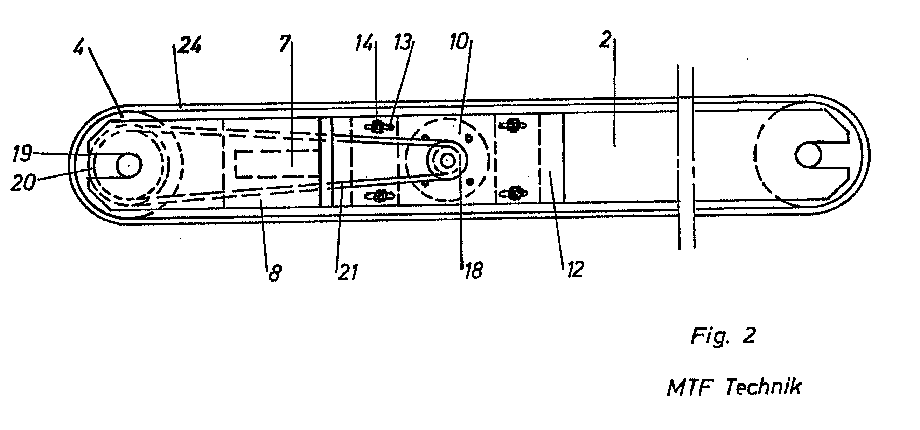

Wie aus den Fig. 1 und 2 ersichtlich, besteht der Förderbandkörper aus den Holmen 1 und 2 sowie den Holmenverstärkungen 3. Die Spannstation und Förderbandverkleidung und die E-Technik ist nicht dargestellt. Der Holm 2 ist nicht bis zur Antriebsrolle 4 geführt. Der Holmverstärkungsflansch 5 ist einerseits fest mit dem Holm 2 und andererseits fest mit dem Holmstück 6 verbunden. Mit dem Holmstück 6 ist ein Distanzstück 7 fest verbunden und nimmt die Antriebsrolle 4 auf. Durch diese Konstruktion ist eine feste Verbindung von Holm 2 hin bis zur Aufnahme der Antriebsrolle 4 gegeben.

Der Holmverstärkungsflansch 5 weist eine Ausnehmung 9 auf, durch die der Getriebemotor 10 in den Förderbandkörper eingeschoben werden kann. Der Holmverstärkungsflansch 5 weist Gewindelöcher 11 auf. Der Motorspannflansch 12 ist mit Langlöchern 13 versehen und wird über Schrauben 14, die in die Gewindelöcher 11 eingeschraubt werden, fest mit dem Holmverstärkungsflansch 5 verbunden.

Außerdem weist der Motorspannflansch 12 eine Bohrung 15 auf, in der der Getriebemotor 10 hineinragt. Der Getriebemotor 10 wird mit Schrauben 16 auf den Motorspannflansch 12 aufgeschraubt. Durch diese Anordnung ist es möglich, den Getriebemotor 10 mit dem Motorspannflansch 12 nach dem Lösen der Schrauben 14 aus dem Förderbandkörper herauszuziehen. An der Getriebemotorwelle 17 ist ein Kettenritzel 18 befestigt. Dieses Kettenritzel 18 liegt im Abstand vor dem Motorspannflansch 12.

Die Antriebsrolle 4 ist in Langlöchern 19 in dem Holm 1 und dem Achshalter 8 gelagert und kann nach vorne herausgezogen werden. Die Antriebsrolle 4 ist mit einem Kettenritzel 20 fest verbunden. Die Antriebskette 21 verbindet kraftschlüssig die Kettenritzel 18, 20. Über die Langlöcher 13 im Motorspannflansch 12 ist es möglich, den Abstand der Kettenritzel 18, 20 zu verändern und somit das Auflegen und Spannen der Antriebskette 21 zu ermöglichen.

Ein Kettenschutz 23 deckt den Förderbandantrieb bestehend aus Kettenritzel 18, 20 und Antriebskette 21 ab.

Der Getriebemotor 10 ist in dem Förderbandkörper gegen den Gurt 24 mit einer nicht dargestellten Blechkonstruktion oder ähnlichem abgegrenzt, damit eventuell austretendes Öl oder dergleichen den Gurt 24 nicht beschädigt. Andererseits wird somit eine Beschädigung durch den Gurt 24 oder vom Gurt 24 mitgenomme Teile verhindert.

Diese Vorrichtung zum Antrieb von Förderbänder kann sowohl rechts oder links angeordnet sein.

Ein Vorteil der Erfindung besteht darin, daß die Förderbänder sehr gering über die Gurtbreite hinausbauen und dadurch an den Übergabestellen keine aufwendigen Konstruktionen im Abwurfbereich erforderlich werden. Ein weiterer Vorteil ist darin zu sehen, daß die Antriebsvorrichtung geschützt im Förderbandkörper liegt und dadurch Transportschäden sowie auch Schäden während des Betriebes an der Antriebsvorrichtung ausgeschlossen werden können.

## Patentansprüche

1. Förderband mit einem aus Holmen (1, 2) gebildeten Förderbandkörper, in dem eine Antriebsrolle (4) und mindestens eine mitlaufende Rolle für einen Gurt (24) gelagert sind, und mit einem innerhalb des Förderbandkörpers angeordneten Antriebselement, das über ein Getriebe mit der Antriebsrolle (4) verbunden ist, dadurch gekennzeichnet, daß das Antriebselement, insbesondere ein Getriebemotor (10), durch eine Ausnehmung (9) im einen Holm (2) in eine Längsseite des Förderbandes eingesteckt und lösbar mit dem Förderbandkörper verbunden ist.

2. Förderband nach Anspruch, 1, dadurch gekennzeichnet, daß das Antriebselement über einen Motorspannflansch (12) mit dem Förderbandkörper verbunden ist.

3. Förderband nach Anspruch 2, dadurch gekennzeichnet, daß der Motorspannflansch (12) Langlöcher (13) aufweist.

4. Förderband nach einem der Ansprüche 1 bis 3, dadurch gekennzeichnet, daß das Antriebselement eine aus dem Förderbandkörper herausragende Antriebswelle (17) hat, die über das Getriebe (18, 20, 21) mit der Antriebsrolle (4) verbunden ist.

5. Förderband nach einem der Ansprüche 1 bis 4, dadurch gekennzeichnet, daß das Antriebselement und Antriebsrolle (4) verbindende Getriebe (18, 20, 21) ein Zugmittelgetriebe, insbesondere ein Kettengetriebe oder Riemengetriebe, ein Reibradgetriebe oder ein Zahnradgetriebe ist.

6. Förderband nach einem der Ansprüche 2 bis 5, dadurch gekennzeichnet, daß der Motorspannflansch (12) über Schrauben (14) mit einem Holmverstärkungsflansch (5) verbunden ist, wobei der Holmverstärkungsflansch (5) fest mit einem Holm (2) bzw. Holmstück (6) des Förderbandkörpers verbunden ist.

7. Förderband nach einem der Ansprüche 1 bis 6, dadurch gekennzeichnet, daß in Querrichtung des Holmes (2) bzw. Holmstückes (6) beidseitig der Antriebsvorrichtung Holmverstärkungen (3) des Förderbandkörpers angeordnet sind.

8. Förderband nach einem der Ansprüche 1 bis 7 in Verbindung mit Anspruch 4, dadurch gekennzeichnet, daß der Förderbandkörper ein einerseits mit dem Holmstück (6) fest verbundenes und die Getriebeachse schneidendes Distanzstück (7) hat, welches andererseits mit einem die Antriebsrolle (4) aufnehmenden Achshalter (8) fest verbunden ist.

## Claims

1. Belt conveyor with a belt conveyor body, which is formed from longitudinal bars (1, 2) and in which a drive pulley (4) and at least one co-revolting pulley for a belt (24) are mounted, and with a drive component, which is arranged inside the belt conveyor body and is connected to the drive pulley (4) via a transmission, characterised in that the drive component, in particular a geared motor (10), is inserted through an opening (9) in a longitudinal bar (2) into a longitudinal side of the belt conveyor and connected to the belt conveyor body in a detachable manner.

2. Belt conveyor according to claim 1, characterised in that the drive component is connected to the belt conveyor body by a motor clamping flange (12).

3. Belt conveyor according to claim 2, characterised in that the motor clamping flange (12) comprises slots (13).

4. Belt conveyor according to claims 1 to 3, characterised in that the drive component has a drive shaft (17) which projects out of the belt conveyor body and is connected to the drive pulley (4) via the transmission (18, 20, 21).

5. Belt conveyor according to one of claims 1 to 4, characterised in that the transmission (18, 20, 21) connecting the drive component and the drive pulley (4) is a traction mechanism transmission, in particular a chain or belt transmission, a friction transmission or a gear transmission.

6. Belt conveyor according to one of claims 2 to 5, characterised in that the motor clamping flange (12) is connected via screws (14) to a longitudinal bar reinforcement flange (5), the latter (5) being firmly connected to a longitudinal bar (2) or longitudinal bar piece (6) of the belt conveyor body.

7. Belt conveyor according to one of claims 1 to 6, characterised in that longitudinal bar reinforcements (3) of the belt conveyor body are arranged in the cross direction of the longitudinal bar (2) or longitudinal bar piece (6) on both sides of the drive device.

8. Belt conveyor according to one of claims 1 to 7 together with claim 4, characterised in that the belt conveyor body comprises a spacer (7) which is firmly connected to the longitudinal bar piece (6) at one side, intersects the transmission shaft and is firmly connected at the other side to a shaft holder (8), which holds the drive pulley (4).

**Revendications**

1. Convoyeur à courroie avec un bati de convoyeur constitué de longerons (1, 2), dans lequel sont logés un rouleau menant (4) et au moins un rouleau mené pour une courroie (24), et avec un élément d'entraînement disposé à l'intérieur du bati de convoyeur et relié au rouleau menant (4) au moyen d'une transmission, caractérisé en ce que l'élément d'entraînement, notamment un moto-réducteur (10), est introduit dans un coté longitudinal du convoyeur à courroie, au travers d'un évidement (9) d'un longeron (2), et est relié de manière démontable au bati de convoyeur.

2. Convoyeur à courroie selon la revendication 1, caractérisé en ce que l'élément d'entraînement est relié au bati de convoyeur par l'intermédiaire d'un flasque de serrage du moteur (12).

3. Convoyeur à courroie selon la revendication 2, caractérisé en ce que le flasque de serrage du moteur (12) comporte des trous oblongs (13).

4. Convoyeur à courroie selon l'une des revendications 1 à 3, caractérisé en ce que l'élément d'entraînement présente un arbre d'entraînement (17) faisant saillie hors du bati du convoyeur, et relié au rouleau menant (4), par l'intermédiaire de la transmission (18, 20, 21).

5. Convoyeur à courroie selon l'une des revendications 1 à 4, caractérisé en ce que la transmission (18, 20, 21) reliant l'élément d'entraînement au rouleau menant (4), est une transmission à élément de traction, notamment: une transmission à chaîne ou une transmission à courroie, une transmission à roues de friction ou une transmission a roues dentées.

6. Convoyeur à courroie selon l'une des revendications 2 à 5, caractérisé en ce que le flasque de serrage du moteur (12) est relié à un flasque de renfort de longeron (5) au moyen de vis (14), le flasque de renfort de longeron (5) étant quant à lui, relié de manière fixe, à un longeron (2) ou à une portion de longeron (6) du bati de convoyeur.

7. Convoyeur à courroie selon l'une des revendications 1 à 6, caractérisé en ce que de chaque coté du dispositif d'entraînement, sont agencés, transversalement au longeron (2) ou à la portion de longeron (6), des renforts de longeron (3) du bati de convoyeur.

8. Convoyeur à courroie selon l'une des revendications 1 à 7, caractérisé en ce que le bati de convoyeur possède une entretoise (7), qui d'une part est reliée de manière fixe à la portion de longeron (6) et coupe l'axe de la transmission, et qui d'autre part est relié de manière fixe avec un support d'arbre (8) réceptionnant le rouleau menant (4).

Fig. 1

EP 0 296 255 B1

MTF Technik

Fig. 2

MTF Technik